# EUROPÄISCHE PATENTANMELDUNG

(11) **EP 1 026 846 A2**
(43) Veröffentlichungstag der Anmeldung: **09.08.2000**
(21) Anmeldenummer: 00440008.1
(22) Anmeldetag: 14.01.2000
(51) Int. Cl.: H04H 1/02, H04N 7/10

(54) **Passives Filter für ein Fernmeldenetz**

(30) Priorität: 06.02.1999 DE 19904939
(71) Anmelder: ALCATEL, 75008 Paris (FR)
(72) Erfinder: Halbauer, Hardy, 76275 Ettlingen (DE); Enssle, Jürgen, 70734 Fellbach (DE); Heidemann, Rolf, 71732 Tamm (DE); Krimmel, Heinz G., 70825 Korntal-Münchingen (DE)
(74) Vertreter: Rausch, Gabriele, Dr.

(57) **Zusammenfassung**

Es wird ein passives Filter zur Verbindung von einem hochqualitativen Betreiber- Netz und einem einstrahlungsanfälligen privaten lokalen Netz vorgeschlagen, wobei das Filter Mittel zur Detektion eines codierten Steuer-Signales und Mittel zum Durchschalten des Sende-Signals eines Teilnehmermodems bei Empfang der Steuer-Signalisierung enthält und zusätzlich Mittel zur Selektion unterschiedlich kodierter Steuer-Signalisierungen enthält zur variablen Einstellung der Übertragungseigenschaften des passiven Filters.

## Beschreibung

Die Erfindung geht aus von einem passiven Filter in einer Verbindung von einem Betreiber- Netz zu einem privaten lokalen Netz (z.B. ein Hausnetz) nach der Gattung des Hauptanspruchs.
Allgemein wächst das Bedürfnis nach Informationen und die Menge der übertragenen Daten nimmt zu. Dabei entsteht auch ein Bedarf bestehende hybride Faser-Koaxialnetze für die unterschiedlichsten Datenübertragungsformen zu nutzen. Beispielhaft sind hier die Kabelverteilnetze genannt, die über Baumstrukturen mit einer erheblichen Anzahl von Hausanschlüssen verbunden sind. Dabei weisen die Betreiber-Netze mit Glasfaserübertragung und aufwendiger Koaxkabeltechnik meist gute Übertragungsqualitäten auf, während die privaten lokalen Netze, wie beispielsweise Hausanschlußnetze, mit preisgünstigen Koaxialkabeln und Installationen aufgebaut sind. Dies führt in vielen Fällen zu Einstrahlstörungen in der Rückrichtung, d.h. vom Teilnehmer zur Kopfstelle des Netzes.
In Verteilrichtung wird an den zahlreichen Übergabepunkten zwischen den Netzabschnitten das zu verteilende Signal aus dem Betreiber- Netz in das lokale Netz übergeben. Probleme entstehen für die Rückrichtung bei der Aufaddierung der zahlreichen Rückkanalsignale, die Störungen aus den privaten Netzen mitführen, am Summationspunkt z.B. in der Kopfstelle. Dadurch wird die Möglichkeit den Rückkanal über ein Kabelverteilnetz zur Datenübertragung zu nutzen und die Netzkapazität limitiert. In der Veröffentlichung "Silencing Return Path Ingress ...", Ch. Williams, Proceedings NCTA Cable '98, Convention Atlanta wird ein passives Filter vorgeschlagen, das zur Verminderung des akkumulierten Rauschens am Knotenpunkt führt. Dieses passive Filter besteht aus zwei Diplexern zur Separation der Richtungssignale und einem Hochpassfilter zur unbeeinflussten Durchleitung des Verteilrichtungssignals und gleichzeitiger Sperrung des Rückrichtungssignals. Die Rückkanalsignale enden im passiven Filter, solange der gesteuerte Schalter im Rückkanalzweig nicht durchgeschaltet wird. Das Durchschalten geschieht durch Detektion eines Pilottones, den das Modem eines Teilnehmers aussendet, um zu signalisieren, daß nun Sendesignale im Rückkanal ausgesendet werden, die während des Sendeintervalls durchgelassen werden sollen. Für dieses Modem wird das passive Filter durch Aktivierung eines Schalters durchlässig. In diesem Verfahren ist eine feste Frequenz für die Steuer-Signalisierung mit dem unmodulierten Pilotron festgelegt, deren einfache Anwesenheit bereits das Filter durchlässig schaltet. Dadurch wird das System anfällig für Sabotage, das passive Filter kann durch Senden eines einfach zu generierenden Dauertons geöffnet und damit die Rauschproblematik im Knotenpunkt wieder erzeugt werden oder sogar absichtlich zusätzlich Störenergie eingespeist werden, die dann das öffentliche Netz erreicht.

Aufgabe der Erfindung ist es die Sabotageanfälligkeit der bekannten Lösung zu vermeiden und zusätzlich eine Verbesserung der Anbindung der Rückkanalsignale, vor allem für CDMA typische Signale, an das öffentliche Netz bei gleichzeitiger Störsignalpegelminimierung zu erzielen.

Das erfindungsgemäße Filter mit den kennzeichnenden Merkmalen des Hauptanspruchs hat den Vorteil, die Sabotageanfälligkeit zu vermindern, indem eine kodierte Steuer-Signalisierung verwendet wird um das passive Filter im Rückkanal durchzuschalten, und die Störsignaleinkopplungen zu minimieren indem am Übergabepunkt ferngesteuert unterschiedliche Übertragungseigenschaften ausgewählt werden können.

Das passive Filter dient dabei nicht als Verbindungspunkt, sondern kann Teil des lokalen oder des Betreibernetzes sein.

Durch die in den Unteransprüchen aufgeführten Maßnahmen sind vorteilhafte Weiterbildungen und Verbesserungen des im Hauptanspruch angegebenen passiven Filters möglich.

Besonders vorteilhaft ist es, daß die Ausgangskanäle mit anpaßbaren Filtern pro Kanal versehen sind. Dadurch wird je nach Kodierung des Steuer-Signals das Sende-Signal im Rückkanal auf unterschiedliche Ausgangskanäle geschaltet, wobei die Filter durch eine angepasste Dämpfung des Signals den Übergabepegel optimieren oder durch Filterung den freigegebenen Frequenzbereich einschränken. Damit wird eine Anpassung des eingespeisten Signals an die Bedürfnisse des öffentlichen Netzes ermöglicht. Diese Eigenschaft ist vor allem für zu übertragende Modem-Sendesignale im Code Division Multiple Access vorteilhaft, die in einiger Ausprägungen lange Sendeintervalle aufweisen im Vergleich zu TDMA (Time Division Multiple Access).

Von Vorteil ist für die Steuer-Signalisierung eine "Spread Spectrum Modulation", die gleichzeitig zur Kodierung und Adressierung als auch zur Energieverwischung über ein breiteres spektrales Band eingesetzt wird, um Störungen durch den hohen Steuer-Signalisierleistungspegel zu verschleiern.

Vorteilhafterweise werden die anpaßbaren Filter eingesetzt um die Signale des Rückkanals an die Anforderungen des öffentlichen Netzes anzupassen. Es ist dabei wünschenswert, im lokalen Netz einen maximalen Sendepegel zu erreichen und am Übergabepunkt die maximale Dämpfung einstellen zu können, die dann die im öffentlichen Netz erforderliche Signalleistung gerade ergibt. So benötigt ein Kabeltelefonsignal größere Empfangsleistung als das Signal einer "set top box". Durch die unterschiedlichen Kodierungen in der Steuer-Signalisierung werden unterschiedliche Anforderungen an den Service wie Kabelmodem-, Kabeltelefon- oder Video-on-Demand- Signale auf unterschiedliche Kanäle im passiven Filter geschaltet, und angepasst gefiltert, worunter auch eine Signaldämpfung verstanden wird. Durch die spezifischen Massnahmen bei der Signalübergabe und der damit verbundenen Minimierung der dabei miteingeleiteten Störungen, optimiert sich die nutzbare Signalqualität des Rückkanals und damit seine Datenkapazität.
Das passive Filter kann mit unterschiedlichen Arten von Kodierungen eingesetzt werden. Da das passive Filter keine lokale elektrische Versorgung braucht, kann es an beliebigen notwendigen Orten eingesetzt werden, und ist unabhängig von elektrischen Installationen des Energienetzes.

Ein Ausführungsbeispiel der Erfindung ist in der Zeichnung dargestellt und in der nachfolgenden Beschreibung näher erläutert.
Fig. 1 zeigt einen beispielhaften Ausschnitt aus dem hier betrachteten teilnehmernahen Zugangsnetzabschnitt
Fig. 2 zeigt exemplarisch den Aufbau eines erfindungsgemässen passiven Filters.

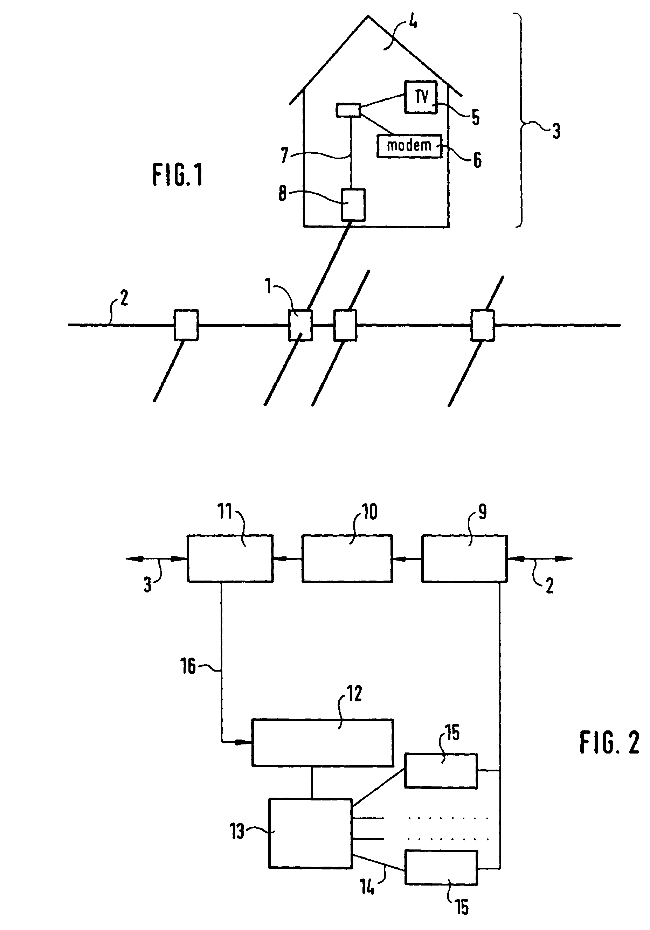

In Fig. 1 verbindet ein Übergabepunkt 1 das Betreiber-Netz 2 mit einem privaten lokalen Netz 3. Im lokalen Netz 3 sind verschiedene Teilnehmer mit dem Übergabepunkt 1 verbunden, wobei ein Teilnehmer 4 repräsentativ dargestellt ist. Am Standort des Teilnehmers 4 ist beispielsweise ein Fernsehempfangsgerät 5 und ein Modem 6 angeschlossen. Die Anschlüsse der beiden Geräte gehen über eine Leitung 7 auf ein passives Filter 8. Die Ausgänge des passiven Filters 8 sind mit dem Übergabepunkt 1 verbunden. Über die Leitung 7 empfängt der Teilnehmer 4 Fernsehsignale aus dem öffentlichen Netz 2. Möchte er über seine Anschlußleitung 7 selbst Informationen oder Signale das Netz 2 einspeisen, nützt er sein Modem 6. Das Modem 6 schickt einen kodierten Pilotton aus, der das passive Filter 8 durchlässig schaltet. Dadurch steht das Modem 6 mit dem Übergabepunkt 1 in Verbindung. Verwendet man ein TDMA Verfahren, sendet jedes Modem jedes Teilnehmers in einem zuvor definierten festen Zeitschlitz. Da ein sendendes Modem mit einem speziellen, kodierten Steuer-Signal eine Freischaltung des Rückkanals bewirken muß, wird Sabotage erschwert. Der Einsatz eines reinen CDMA oder eines gemischten CDMA / TDMA Verfahrens für das Rückkanalsignal ist aus Gründen der Robustheit und Flexibilität vorteilhaft. Bei einem CDMA Verfahren senden die Modems zeitlich parallel zueinander. Durch den Steuer-Signalisier-Code wird durch die aufgeschalteten Modem auch für den CDMA-Betrieb eine Freischaltung für die Dauer der Sendung erreicht.

Fig. 2 zeigt eine Ausführungsform des passiven Filters 8. Das Betreiber-Netz 2 ist mit dem Eingang eines ersten Diplexers 9 verbunden. Dieser Diplexer steht wiederum mit einem Hochpaßfilter 10 und dieses wiederum mit einem zweiten Diplexer 11 in Verbindung. Der zweite Diplexer 11 ist mit dem privaten lokalen Netz 3 verbunden. Das Verteilrichtungssignal wird ohne merkliche Verluste durch das Filter von 2 nach 3 geführt. Für die Weiterleitung des Rückkanalsignals aus dem privaten lokalen Netz 3 in das Betreiber- Netz 2 ist im passiven Filter ein getrennter Kanal vorhanden. Der Diplexer 11 ist dazu mit einem Detektor 12 verbunden. Der Detektor 12 steht mit einem Schalter 13 in Verbindung, der mehrere Ausgänge 14 aufweist, die wiederum mit Filtern 15 verbunden sind. Die Filter 15 können im Frequenzbereich filtern und/oder Dämpfungen enthalten. Die Ausgänge der einzelnen Filter 15 sind an den Diplexer 9 angeschlossen. Bei einem Aufschalten eines Modems aus dem privaten lokalen Netz 3 selektiert der Diplexer 11 das Rückkanalsignal und die Steuer-Signalisierung auf den Signalzweig 16. Der Detektor 12 ist in der Lage, einen kodierten Pilotton zu detektieren und schaltet das Rückkanalsignal über den Schalter 13 auf einen oder mehrere der Ausgangskanäle 14. Unterschiedlich kodierte Pilottöne erzeugen unterschiedliche Schalterstellungen und werden unterschiedlichen Ausgangskanälen 14 zugewiesen. In den Filtern 15 wird der jeweilige Rückkanal einer Abschwächung und/oder Filterung unterworfen, die an sein spezielles Signalformat angepaßt ist. So benötigt beispielsweise das Signal einer set top box einen geringeren Signalpegel und kann einer hohen Abschwächung unterzogen werden. Schmalbandige Rückkanalsignale eines Modems benötigen z.B. nur die Freischaltung eines Teils des gesamten Rückkanalspektrums, sodaß keine Störungen in die verbleibenden Frequenzbereiche hinzugefügt werden. Der Detektor 12 ist in der Lage, unterschiedliche Arten von kodierten Signalen als Kriterium für die Einstellung des Schalters 13 zu verstehen. Bei der Kodierung kann es sich beispielsweise um einzelne, modulierte Frequenzen, spezielle Modulationsrhythmen oder um andere definierte Signalisierungen handeln. Es muß lediglich vom Modem ein eindeuiges Steuerkommando an das passive Filter übertragen werden, das die Einstellung der Übertragungseigenschaften im passiven Filter bewirkt und nicht mit einfachen Mitteln zu imitieren ist. Eine mögliche Kodierung ist auch die Spread Spectrum Modulation, wobei zusätzlich der Vorteil entsteht daß die Steuer-Signalisier-Leistung auf dem Rückkanal spektral breiter verteilt wird und so Probleme mit durch Nichtlinearitäten und Rückreflexionen in die Verteilrichtung gelangenden Störungen vermieden werden.

Eine weitere Ausführungsform schaltet die vom Modem übertragenen Signale nicht auf unterschiedliche Ausgangskanäle sondern benützt einen Ausgangskanal. Die Signale werden aber je nach Signalisierung adaptiert und dann seriell in den Rückkanal eingespeist. Dabei werden die Siganle nicht nur ein- und ausgeschaltet, sondern mit anpaßbaren Filtern in der Frequenz und/oder der Leistung beeinflußt und anschliessend wieder zu einem Datenstrom zusammengestellt.

## Patentansprüche

1. Passives Filter (8) in einer Verbindung von einem Betreiber- Netz (2) und einem lokalen Netz (3), wobei das Filter (8) Mittel (12) zur Detektion einer Steuer-Signalisierung und Mittel (13) zum Durchschauen des Sende-Signals eines Teilnehmermodems bei Empfang der Steuer-Signalisierung enthält, dadurch gekennzeichnet, daß das passive Filter Mittel (12,13) zur Selektion unterschiedlich kodierter Steuer-Signalisierungen eines oder unterschiedlicher Teilnehmer mit Schaltern auf unterschiedliche Ausgangskanäle (14) enthält. Passives Filter nach Anspruch 1, dadurch gekennzeichnet, daß die unterschiedlichen Ausgangskanäle (14) Mittel zur Anpassung, der Übertragungseigenschaftenpro Kanal enthalten.

2. Passives Filter nach Anspruch 2, dadurch gekennzeichnet, daß die anpaßbaren Filter (15) in den Ausgangskanälen (14) durch die Steuer-Signalisierung eingestellt werden.

3. Passives Filter nach Anspruch 1, dadurch gekennzeichnet, daß die unterschiedlichen Ausgangskanäle (14) in einem einzelnen Pfad zusammengefasst sind, der in seiner Eigenschaft durch die Steuer-Signalisierung eingestellt werden kann.

4. Passives Filter nach Anspruch 1, dadurch gekennzeichnet, daß die Übertragungseigenschaften der unterschiedlichen Ausgangskanäle (14) an ein Sendesignal für CDMA (Code Division Multiple Access) angepasst sind und dazu verschiedene Dämpfungen schaltbar sind.

5. Passives Filter nach Anspruch 1, dadurch gekennzeichnet, daß die Steuer-Signalisierung über eine Spread Spectrum Modulation zur Adressierung und/oder zur Energieverwischung erfolgt.

6. Passives Filter (8) in einer Verbindung von einem Betreiber- Netz (2) und einem lokalen Netz (3), wobei das Filter (8) Mittel (12) zur Detektion einer Steuer-Signalisierung und Mittel (13) zum Durchschalten des Sende-Signals eines Teilnehmermodems bei Empfang der Steuer-Signalisierung enthält, dadurch gekennzeichnet, daß das passive Filter Mittel (12,13) zur Selektion unterschiedlich kodierter Steuer-Signalisierungen eines oder unterschiedlicher Teilnehmer und Mittel zur Anpassung der Sendesignale enthält und die vorselektieren angepassten Daten seriell auf einen Ausgangskanal geschaltet werden.
